# EUROPEAN PATENT SPECIFICATION

(11) **EP 2 550 561 B1**
(45) Date of publication and mention of the grant of the patent: **12.11.2014**
(21) Application number: 11723612.5
(22) Date of filing: 25.03.2011
(51) Int. Cl.: A63J 13/00

(54) **APPARATUS FOR GENERATION OF A VOLUME OF FREE AIR ADAPTED FOR PROJECTION OF IMAGES ON NON-SOLID SCREEN**
VORRICHTUNG ZUR ERZEUGUNG EINES VOLUMENS VON FREILUFT ZUR BILDPROJEKTION AUF EINEM NICHT-FESTEN BILDSCHIRM
APPAREIL DESTINÉ À GÉNÉRER UN VOLUME D'AIR LIBRE PERMETTANT LA PROJECTION D'IMAGES SUR UN ECRAN NON-SOLIDE

(43) Date of publication of application: 30.01.2013
(73) Proprietor: Ferrari, Manfredo Giuseppe Mario, 20020 Arese (Milano) (IT)
(72) Inventor: FERRARI, Manfredo Guiseppe Mario, I-20020 Arese (Milano) (IT); MUGAVERO, Roberto, I-00173 Roma (IT); SAGGIO, Giovanni, I-00133 Roma (IT)
(74) Representative: Lotti, Giorgio
(86) International application number: PCT/IB2011/000645
(87) International publication number: WO 2011/117721

(56) References cited:
- EP-A1- 0 503 289
- JP-A- 7 056 235
- JP-A- 2001 147 490
- JP-U- H 039 800
- US-A1- 2004 001 182
- US-A1- 2006 081 728

## Description

The present invention relates to an apparatus for generation of a volume of free air adapted for projection of images on a non-solid support.

Presently known is a technology enabling images to be reproduced in free air without requiring the presence of any "solid" support on which to project the images.

This type of projection that is called "holography" is very advantageous because it allows images to be reproduced where otherwise it would be very difficult to arrange a solid projection support, such as a plane surface, a monitor, etc.

In addition, this type of projection is very advantageous because it is absolutely non-invasive with respect to the environment wherein the images are intended to be projected.

Consequently, it is possible to state that the projection technology of holographic images of the present invention can be mainly put into practice in environments such as:
- the archaeological sites, where the holographic projection does not hinder the sight of the site itself and, where installation of solid projection supports is not possible, without damaging the site itself;
- the museum sites, where usually the spaces intended for image projections are separated from the exhibition spaces due to different lighting requirements;
- the business sites, where it is possible to reproduce the products enlarged to life-size, without bulky supporting structures for the same being required.

From the above examples, the list of which is not exclusive but only given by way of example, it is apparent that the application fields of the technology of projecting holographic images of the present invention can be the most variable ones and that this technology enables images to be projected where otherwise it would not be possible to do it, due to space or light constraints or difficulties in installing conventional screens.

This holographic projection technology takes advantage of the optical properties of water, indices of reflection and refraction, for generating a circumscribed volume of an nebulized air-water mixture that will behave like a screen adapted for image projection.

Once this screen has been reproduced, which screen at all events can be defined as "virtual" as it is only made of an nebulized air-water mixture, it is possible to reproduce moving images thereon using the more or less traditional methods such as the video projection, laser projection, live shot projection with videocamera, etc.

The apparatus for the image projection is not the object of the present invention.

The presently known apparatuses generating these volumes of free air adapted for projection of holographic images comprise a blowing device fed with an nebulized air-water mixture generating, through an outlet orifice, a substantially flat laminar flow of this mixture in motion along an advancing direction.

The difficulties that have to be faced for generating high-quality projections in free air relate to the difficulty in circumscribing and controlling the volumes of air-water mixture suitable for projection where, as mentioned above, these volumes are in motion and therefore subjected to the fluid dynamics laws.

It is in fact a problem of the known art the fact that in distal positions from the flow source, the mixture does no longer move with a laminar motion adapted for holographic projection, but has a tendency to become turbulent thus impairing the quality of the projected image.

This problem is greatly increased when there is a requirement for projecting images of big height, such as the projection of a life-size person.

It is an aim of the present invention to provide an apparatus for generation of a volume of free air adapted for projection of images on a non-solid support which is able to solve the above mentioned drawbacks of the known art in a very simple, cheap and particularly functional manner.

Another aim of the invention is to provide an apparatus for generation of a volume of free air adapted for projection of images on a non-solid support capable of projecting high-quality images having big heights, such as projection of a life-size person, for example.

It is a further aim of the invention to provide an apparatus for generation of a volume of free air adapted for projection of images on a non-solid support in which the quality of the projected images is the same in the whole projection volume both distal and proximal to the source of the laminar flow of the nebulized air-water mixture.

The above aims are achieved by providing an apparatus for generation of a volume of free air adapted for projection of images on a non-solid support, as set out in the appended claims.

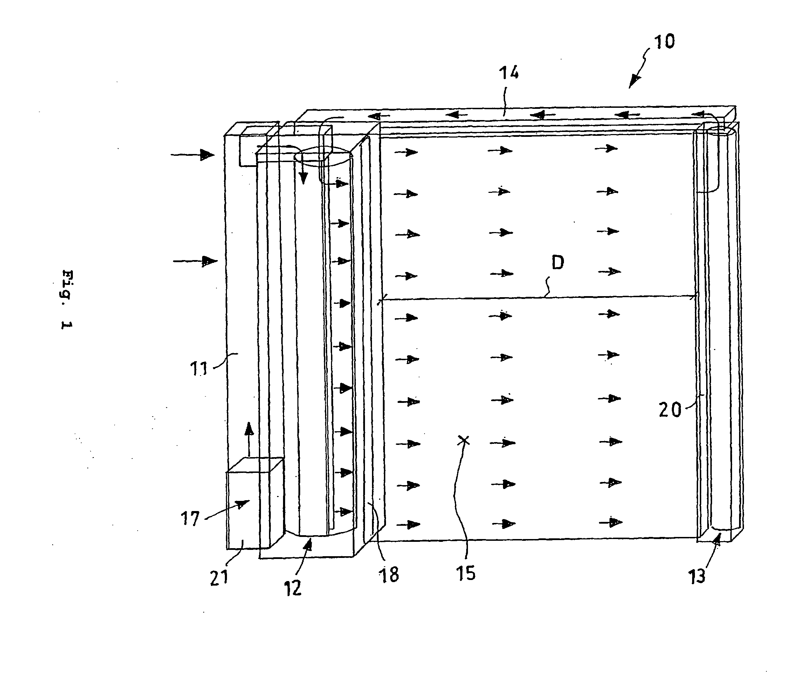

The features and advantages of an apparatus for generation of a volume of free air adapted for projection of images on a non-solid support according to the present invention will be more apparent from the following description, given by way of non-limiting example, with reference to the accompanying drawing in which the only figure shows a diagrammatic view of an example embodiment of an apparatus for generation of a volume of free air adapted for projection of images on a non-solid support according to the present invention. With reference to this figure, an example of an apparatus for generation of a volume of free air adapted for projection of images on a non-solid support according to the present invention is identified with 10.

This apparatus comprises a blowing device 12 fed with an nebulized air-water mixture generating a substantially flat laminar flow of this mixture through an outlet orifice 18 and along an advancing direction.

In particular, according to the invention, the apparatus further comprises a device 13 for attracting the mixture forced into a laminar motion, which attracting device is placed downstream of the blowing device 12 relative to the mixture advancing direction.

This attracting device 13 is provided with an inlet orifice 20 for the mixture such disposed as to face the outlet orifice 18 of the blowing device 12 where distance D between the two orifices, 18, 20 respectively, is of such a value that the mixture flow from the outlet orifice 18 to the inlet orifice 20 is substantially maintained of the laminar type.

In an embodiment, the attracting device 13 comprises a suction apparatus.

The presence of the suction apparatus, both causes motion of the mixture in a distal position from the outlet orifice 18 to be extended and, through suction of the mixture, ensures that said mixture will continue its laminar motion also on the last stretch of its travel. It is in fact known that this laminar motion is necessary for creation of a projection area that is reliable and not very sensitive to the external conditions.

As shown in the figure, the apparatus further comprises a chamber 11 for generating the nebulized air-water mixture which is connected to the blowing device 12 and provided with at least one opening for introduction of air into the chamber from the external environment. According to the example shown, the generating chamber 11 comprises a water tank 21 and an ultrasound generator 17 associated with the water tank 21 for water nebulization in chamber 11.

Preferably the blowing device comprises a centrifugal fan 12 and its outlet orifice is in the form of a slit 18. In a like manner, the suction apparatus comprises a centrifugal aspirator 13 and its inlet orifice is in the form of a slit 20.

Preferably the apparatus further comprises a mixture recirculation duct 14 from the inlet orifice 20 to the outlet orifice 18.

According to two different examples, this recirculation duct 14 connects the suction device to the blowing device 12 or to the mixture generating chamber 11 connected to the blowing device 12.

According to a preferred embodiment, the generating chamber 11 comprises a ionising device acting on the mixture for ion generation.

In a complementary manner, in this embodiment the attracting device 13 comprises an element electrically charged in the opposite way relative to such ions and acting as an attraction for the ions.

By way of example, said ions can be anions, i.e. negatively charged ions, and the electrically charged element being part of the attracting device can therefore be positively charged.

By doing so, together with the presence of the suction apparatus placed to the particular distance D and the slit-shaped conformation of the inlet 20 and outlet 18 orifices, the laminar motion of the mixture from the blowing device 12 to the attracting device 12 is further induced and controlled.

Note that said suction apparatus and electrically charged element can be used both combined together so as to advantageously add up the effects of same, and individually, in embodiments of simpler structure.

In order to prevent installation problems for the apparatus, the water tank can be of the type movable in rotation relative to the outlet orifice of the blowing device 12. In this way horizontal positioning of the tank is always ensured, irrespective of the orientation of the outlet orifice 18.

In the same manner the inlet orifice 20 too can be oriented relative to the suction device 13. Should simultaneous accomplishment of different separate images disposed side by side be required, the apparatus can comprise an intermediate device which is, on one side, an attracting device and, on the other side, a blowing device; this intermediate device is advantageously disposed at an intermediate position between the blowing device 12 and the attracting device 13.

In the last-mentioned case it will be necessary to suitably adjust the distance between the blowing 12 and attracting 13 devices and the intermediate device, in order to maintain the mixture motion laminar between these separate stretches.

In an embodiment, to enable adjustment of distance D between the blowing device 12 and the attracting device 13, at least one of these devices can be movably supported on a perimetral frame-shaped frame work.

In order to provide for an automatic adjustment of the distance and mutual position of the blowing device 12 and the attracting device 13, apparatus 10 can be equipped with one or more pressure sensors adapted to sense the mixture flow along the propagation thereof between the blowing device 12 and the attracting device 13.

Advantageously, said one or more pressure sensors are associated with a control unit in turn connected to a motor drive; the control unit, as a funct ion of the data detected by said sensors, controls the motor drive for mutual positioning, in an automatic manner, of the blowing device 12 and the attracting device 13 at the distance D between the orifices 18 and 20, so that the laminar motion of the mixture can be maintained over all this stretch.

Finally, in order to prevent formation of condensate on the outlet orifice 18 and inlet orifice 20, which condensate actually could nullify the lamina r motion of the mixture between said orifices, the blowing device 12 and/or suction device 13 can comprise heating or cooling means acting on said orifices 18 and 20.

Thus it is possible to see that an apparatus for generation of a volume of free air adapted for projection of images on a non-solid support according to the present invention achieves the aims previously set out.

In fact, the apparatus for generat ion of a volume of free air adapted for projection of images on a non-solid support according to the present invention is able to project high-quality images having big heights, such as projection of a life-size person, where the quality of the projected images is the same in the whole projection volume both distal and proximal to the source of the laminar flow of the nebulized air-water mixture.

This effect is ensured by the attracting device 13 facing the blowing device 12 at such a distance D that the mixture flow is maintained substantially of the laminar type in the whole projection volume.

## Claims

1. An apparatus for generation of a volume of free air (15) adapted for projection of images on a non-solid support comprising a blowing device (12) fed with an nebulized air-water mixture generating a substantially flat laminar flow of said mixture through an outlet orifice (18) and along an advancing direction; said apparatus comprising a chamber (11) for generating said nebulized air-water mixture connected to said blowing device (12) and provided with at least one opening for introduction of air into said chamber from the external environment, said apparatus further comprising a device (13) for attracting said mixture forced into a laminar motion, placed downstream of said blowing device (12) relative to the mixture advancing direction, said attracting device (13) being provided with an inlet orifice (20) for said mixture which is disposed so as to face said outlet orifice (18) of said blowing device (12), said orifices (18, 20) being configured in the form of a slit and being disposed to such a distance (D) from each other that the flow of said mixture from said outlet orifice (18) to said inlet orifice (20) is substantially of laminar type **characterized in that** said generating chamber (11) further comprises a ionising device acting on said mixture for ion generation, said attracting device (13) comprising an electrically charged element which is charged in the opposite way relative to said ions for attraction of the latter.

2. An apparatus as claimed in claim 1, wherein said attracting device (13) comprises a suction apparatus configured for sucking said mixture through said inlet orifice (20).

3. An apparatus as claimed in anyone of the preceding claims, **characterised in that** the inlet orifice (20) can be oriented relative to said suction device (13).

4. An apparatus as claimed in anyone of the preceding claims, **characterised in that** it comprises an intermediate device which on one side is an attracting device and on the other side is a blowing device, said intermediate device being disposed at an intermediate position between said blowing device (12) and attracting device (13).

5. An apparatus as claimed in anyone of the preceding claims, **characterised in that** said blowing device (12) and attracting device (13) are supported in a movable manner by a perimetral frame-shaped framework.

6. An apparatus as claimed in anyone of the preceding claims, comprising:
- one or more pressure sensors adapted to sense the mixture flow along the propagation of said mixture between the blowing device (12) and the attracting device (13);
- a control unit connected to said one or more pressure sensors;
- a motor drive interlocked with said control unit, in which said control unit, depending on the data detected by said sensors, controls said motor drive for mutual positioning, in an automatic manner, of the blowing device (12) and the attracting device (13).

7. An apparatus as claimed in anyone of the preceding claims, **characterised in that** said blowing device (12) and attracting device (13) comprise heating or cooling means for said orifices (18, 20) which are configured in such a manner as to prevent formation of condensate on said orifices (18, 20).

8. An apparatus as claimed in anyone of the preceding claims, **characterised in that** it comprises a recirculation duct (14) for said mixture sucked by said inlet orifice (20) to said outlet orifice (18).

9. An apparatus as claimed in claim 8, **characterised in that** said recirculation duct (14) connects said suction device (13) to said blowing device (12).

10. An apparatus as claimed in claim 8, **characterised in that** said recirculation duct (14) connects said suction device (13) to a mixture-generating chamber (11), which is connected to said blowing device (12).

11. An apparatus as claimed in anyone of the preceding claims, wherein said mixture-generating chamber (11) comprises a water tank and an ultrasound generator (17) associated with said water tank for nebulization of said water in said mixture-generating chamber (11).

12. An apparatus as claimed in claim 11, wherein said water tank is movable in rotation relative to said mixture outlet orifice (18) of said blowing device (12) in such a manner as to ensure horizontal positioning of said tank irrespective of the orientation of said outlet orifice (18).

## Patentansprüche

1. Vorrichtung zum Erzeugen eines Freiluftvolumens (15) zur Bildprojektion auf einem nicht-festen Träger, die eine mit einem vernebelten Luft-WasserGemisch gespeiste Blasvorrichtung (12) umfasst, die eine im Wesentlichen flache laminare Strömung dieses Gemischs durch eine Austrittsöffnung (18) und entlang einer Vorwärtsbewegungsrichtung erzeugt; wobei diese Vorrichtung eine Kammer (11) zum Erzeugen des vernebelten Luft-Wasser-Gemischs umfasst, die mit der Blasvorrichtung (12) verbunden und mit mindestens einer Öffnung zum Einleiten von Luft aus der äußeren Umgebung in diese Kammer versehen ist, wobei diese Vorrichtung ferner eine Vorrichtung (13) zum Anziehen des zu einer laminaren Bewegung gezwungenen Gemischs umfasst, die bezogen auf die Vorwärtsbewegungsrichtung des Gemischs stromabwärts der Blasvorrichtung (12) angeordnet ist, wobei diese Anziehungsvorrichtung (13) mit einer Eintrittsöffnung (20) für dieses Gemisch versehen ist, die so angeordnet ist, dass sie der Austrittsöffnung (18) der Blasvorrichtung (12) zugewandt ist, wobei diese Öffnungen (18, 20) in der Form eines Spalts ausgestaltet und in einem solchen Abstand (D) voneinander angeordnet sind, dass der Strom des Gemischs von der Austrittsöffnung (18) zur Eintrittsöffnung (20) im Wesentlichen laminaren Typs ist, **dadurch gekennzeichnet, dass** die Erzeugungskammer (11) ferner eine Ionisationseinrichtung umfasst, die auf das Gemisch zur Ionenerzeugung einwirkt, wobei die Anziehungsvorrichtung (13) ein elektrisch geladenes Element umfasst, das in der bezogen auf diese Ionen entgegengesetzten Weise geladen ist, um diese Letzteren anzuziehen.

2. Vorrichtung nach Anspruch 1, bei der die Anziehungsvorrichtung (13) eine Saugvorrichtung umfasst, die gestaltet ist, um das Gemisch durch die Eintrittsöffnung (20) anzusaugen.

3. Vorrichtung nach einem der vorhergehenden Ansprüche, **dadurch gekennzeichnet, dass** die Eintrittsöffnung (20) relativ zur Saugvorrichtung (13) ausgerichtet werden kann.

4. Vorrichtung nach einem der vorhergehenden Ansprüche, **dadurch gekennzeichnet, dass** sie eine Zwischenvorrichtung umfasst, die auf der einen Seite eine Anziehungsvorrichtung und auf der anderen Seite eine Blasvorrichtung ist, wobei diese Zwischenvorrichtung in einer Zwischenposition zwischen der Blasvorrichtung (12) und der Anziehungsvorrichtung (13) angeordnet ist.

5. Vorrichtung nach einem der vorhergehenden Ansprüche, **dadurch gekennzeichnet, dass** die Blasvorrichtung (12) und die Anziehungsvorrichtung (13) von einem rahmenförmigen Umfangsgestell beweglich getragen werden.

6. Vorrichtung nach einem der vorhergehenden Ansprüche, umfassend:
- einen oder mehrere Drucksensoren, die geeignet sind, den Gemischstrom entlang der Ausbreitung des Gemischs zwischen der Blasvorrichtung (12) und der Anziehungsvorrichtung (13) abzutasten;
- eine Steuereinheit, die mit dem einen oder den mehreren Drucksensoren verbunden ist;
- einen Motorantrieb, der mit der Steuereinheit verriegelt ist, wobei diese Steuereinheit in Abhängigkeit von den von den Sensoren erfassten Daten den Motorantrieb für die automatische gegenseitige Positionierung der Blasvorrichtung (12) und der Anziehungsvorrichtung (13) steuert.

7. Vorrichtung nach einem der vorhergehenden Ansprüche, **dadurch gekennzeichnet, dass** die Blasvorrichtung (12) und die Anziehungsvorrichtung (13) Heiz- und Kühlmittel für die Öffnungen (18, 20) umfassen, die so gestaltet sind, dass sie die Bildung von Kondensat an den Öffnungen (18, 20) verhindern.

8. Vorrichtung nach einem der vorhergehenden Ansprüche, **dadurch gekennzeichnet, dass** sie einen Umlaufkanal (14) für das angesaugte Gemisch von der Eintrittsöffnung (20) zur Austrittsöffnung (18) umfasst.

9. Vorrichtung nach Anspruch 8, **dadurch gekennzeichnet, dass** der Umlaufkanal (14) die Saugvorrichtung (13) mit der Blasvorrichtung (12) verbindet.

10. Vorrichtung nach Anspruch 8, **dadurch gekennzeichnet, dass** der Umlaufkanal (14) die Saugvorrichtung (13) mit einer Gemischerzeugungskammer (11) verbindet, die mit der Blasvorrichtung (12) verbunden ist.

11. Vorrichtung nach einem der vorhergehenden Ansprüche, bei der die Gemischerzeugungskammer (11) einen Wassertank und einen mit dem Wassertank verbundenen Ultraschallgenerator (17) zum Vernebeln des Wassers in der Gemischerzeugungskammer (11) umfasst.

12. Vorrichtung nach Anspruch 11, bei der der Wassertank relativ zur Gemischaustrittsöffnung (18) der Blasvorrichtung (12) derart drehbeweglich ist, dass die waagrechte Anordnung des Tanks ungeachtet der Ausrichtung der Austrittsöffnung (18) gewährleistet ist.

## Revendications

1. Appareil pour la génération d'un volume d'air libre (15) adapté pour la projection d'images sur un support non solide, comprenant un dispositif de soufflage (12) alimenté avec un mélange air-eau nébulisé générant un écoulement laminaire sensiblement plat dudit mélange à travers un orifice de sortie (18) et suivant une direction de progression ; ledit appareil comprenant une chambre (11) pour générer ledit mélange air-eau nébulisé, connectée audit dispositif de soufflage (12) et pourvue d'au moins une ouverture pour l'introduction d'air dans ladite chambre à partir de l'environnement extérieur, ledit appareil comprenant en outre un dispositif (13) pour attirer ledit mélange forcé dans un mouvement liminaire, placé en aval dudit dispositif de soufflage (12) par rapport à la direction de progression du mélange, ledit dispositif d'attraction (13) étant pourvu d'un orifice d'entrée (20) pour ledit mélange qui est disposé de manière à faire face audit orifice de sortie (18) dudit dispositif de soufflage (12), lesdits orifices (18, 20) étant configurés sous la forme d'une fente et étant disposés à une telle distance (D) l'un de l'autre que l'écoulement dudit mélange dudit orifice de sortie (18) audit orifice d'entrée (20) soit sensiblement de type laminaire, **caractérisé en ce que** ladite chambre de génération (11) comprend en outre un dispositif d'ionisation agissant sur ledit mélange pour la génération d'ions, ledit dispositif d'attraction (13) comprenant un élément chargé électriquement qui est chargé dans le sens opposé par rapport auxdits ions pour l'attraction de ces derniers.

2. Appareil selon la revendication 1, dans lequel ledit dispositif d'attraction (13) comprend un dispositif d'aspiration configuré pour aspirer ledit mélange à travers ledit orifice d'entrée (20).

3. Appareil selon l'une quelconque des revendications précédentes, **caractérisé en ce que** l'orifice d'entrée (20) peut être orienté par rapport audit dispositif d'aspiration (13).

4. Appareil selon l'une quelconque des revendications précédentes, **caractérisé en ce qu'**il comprend un dispositif intermédiaire qui, d'un côté, est un dispositif d'attraction et, de l'autre côté, est un dispositif de soufflage, ledit dispositif intermédiaire étant disposé au niveau d'une position intermédiaire entre ledit dispositif de soufflage (12) et ledit dispositif d'attraction (13).

5. Appareil selon l'une quelconque des revendications précédentes, **caractérisé en ce que** ledit dispositif de soufflage (12) et ledit dispositif d'attraction (13) sont supportés d'une manière mobile par une structure périphérique en forme de cadre.

6. Appareil selon l'une quelconque des revendications précédentes, comprenant :
- un ou plusieurs capteurs de pression pour détecter l'écoulement de mélange le long de la propagation dudit mélange entre le dispositif de soufflage (12) et le dispositif d'attraction (13) ;
- une unité de commande connectée auxdits un ou plusieurs capteurs de pression ;
- un entraînement par moteur verrouillé réciproquement avec ladite unité de commande, dans lequel ladite unité de commande, en fonction des données détectées par lesdits capteurs, commande ledit entraînement par moteur pour le positionnement mutuel, d'une manière automatique, du dispositif de soufflage (12) et du dispositif d'attraction (13).

7. Appareil selon l'une quelconque des revendications précédentes, **caractérisé en ce que** ledit dispositif de soufflage (12) et ledit dispositif d'attraction (13) comprend des moyens de chauffage ou de refroidissement pour lesdits orifices (18, 20) qui sont configurés de manière à empêcher une formation de condensation sur lesdits orifices (18, 20).

8. Appareil selon l'une quelconque des revendications précédentes, **caractérisé en ce qu'**il comprend un conduit de recirculation (14) pour ledit mélange aspiré par ledit orifice d'entrée (20) vers ledit orifice de sortie (18).

9. Appareil selon la revendication 8, **caractérisé en ce que** ledit conduit de recirculation (14) connecte ledit dispositif d'aspiration (13) audit dispositif de soufflage (12).

10. Appareil selon la revendication 8, **caractérisé en ce que** ledit conduit de recirculation (14) connecte ledit dispositif d'aspiration (13) à une chambre de génération de mélange (11), qui est connectée audit dispositif de soufflage (12).

11. Appareil selon l'une quelconque des revendications précédentes, dans lequel ladite chambre de génération de mélange (11) comprend un réservoir d'eau et un générateur d'ultrasons (17) associé audit réservoir d'eau pour la nébulisation de ladite eau dans ladite chambre de génération de mélange (11).

12. Appareil selon la revendication 11, dans lequel ledit réservoir d'eau est mobile en rotation par rapport audit orifice de sortie de mélange (18) dudit dispositif de soufflage (12) de manière à garantir le positionnement horizontal dudit réservoir indépendamment de l'orientation dudit orifice de sortie (18).
